# EUROPÄISCHE PATENTANMELDUNG

(11) **EP 1 406 173 A2**
(43) Veröffentlichungstag der Anmeldung: **07.04.2004**
(21) Anmeldenummer: 03021042.1
(22) Anmeldetag: 17.09.2003
(51) Int. Cl.: G06F 11/36

(54) **Verfahren zum Testen eines Softwaresystems für technische Anlagen**

(30) Priorität: 02.10.2002 DE 10246097
(71) Anmelder: SIEMENS AKTIENGESELLSCHAFT, 80333 München (DE)
(72) Erfinder: Kuth, Rainer, 91074 Herzogenaurach (DE)

(57) **Zusammenfassung**

Zum Testen (11) eines Softwaresystems (5) für technische Anlagen unter Einbezug einer technischen Anlage (1, 25), die bei einem Kunden in Betrieb ist, wird ein Betriebsmodell (3, 27) erstellt, das auf einem reproduzierbaren Betriebsablauf unter für den Kunden relevanten Bedingungen basiert und das das Betreiben der technischen Anlage (3, 27) kontrolliert, wobei das zu testende Softwaresystem (5) auf der technischen Anlage (1, 25) des Kunden eingespielt wird und und wobei diese technischen Anlage (1, 25) mit dem Betriebsmodell (3, 27) betrieben und kontrolliert wird und wobei abschließend der Betrieb der technischen Anlage (1, 25) des Kunden mit dem Betriebsmodell (3, 27) hinsichtlich möglicher aufgetretener fehlerhafter Abläufe ausgewertet wird.

## Beschreibung

Die Erfindung betrifft ein Verfahren zum Testen eines Softwaresystems zum Betreiben einer technische Anlagen.

Softwaresysteme von technischen Anlagen, die viele verschiedene Einsatzmöglichkeiten und Modifikationen aufweisen, können in ihrem Aufbau und in ihrer Funktion sehr komplex werden. Solche komplexen Softwaresysteme und ihre Weiterentwicklungen zu testen ist aufgrund der Mannigfaltigkeit der Möglichkeiten meist nur unter erheblichem Aufwand möglich. Beispielsweise kann der Zeitaufwand beim Testen von Softwaresystemen für Magnetresonanztomographiegeräten in der Größenordnung von einem Jahr liegen. Trotz dieses Aufwands besteht die Gefahr, dass nicht alle Auswirkungen einer neuen Softwareversion auf die verschiedenen technischen Anlagen überprüft werden. Gerade aufgrund des Zeitdrucks, der auf der Entwicklung von Neuerung des Softwaresystems liegt, ist ein vollständiges Testen nur schwer durchführbar, so dass nicht entdeckte Fehler sich erst beim Kunden offenbaren.

Üblicherweise werden komplexe Softwaresysteme vom Hersteller unter möglichst vielen singulären Bedingungen getestet, d.h. für jede Funktion wird ein Test durchgeführt. Dabei können meist besondere Randbedingungen, wie sie beim Betrieb einer technischen Anlage durch einen Kunden vorliegen, nicht berücksichtigt werden. Der Testaufwand beim Hersteller ist insbesondere im Hinblick auf Personal- und Systemkosten sehr hoch, da z.B. aufgrund der Vielfältigkeit der Testaufgabe an mehreren technischen Anlagen gleichzeitig das Softwaresystem getestet wird. Viele Fehler offenbaren sich erst nach der generellen Freigabe und der Auslieferung der Softwaresysteme an den Kunden. Die Problematik bei der Entwicklung von komplexen Softwaresystemen besteht nun darin, dass aufgrund des hohen Testaufwands Innovationen nur sehr langsam an den Kunden weitergegeben werden können. Zusätzlich besteht noch ein hohes Ausfall- und Fehlverhaltenrisiko beim Betrieb der technischen Anlage nach einer Neueinspielung eines Softwaresystems.

Eine Softwareaktualisierung erfolgt für technischen Anlagen, beispielsweise für Magnetresonanztomographiegeräte (MR-Geräte), aufgrund der Komplexität der Software in etwa jährlich, wobei die Neuerungen der Software gesammelt und auf technischen Anlagen des Herstellers gemeinsam durchgetestet werden.

Aus DE 101 25 384 A1 ist eine Vorrichtung sowie ein Verfahren zur Inbetriebnahme und/oder Diagnose von Steuerungssystemen. Ein Steuerungssystem ist dabei beispielsweise ein System, welches einen Automaten über einen Mikrokontroller mit einem entsprechenden Steuerungsprogramm steuert. Die Vorrichtung weist eine Darstellungseinrichtung zur Darstellung der Funktionalität des Steuerungssystems über ein Objektmodell auf. Das Objektmodell ist ein Abbild der Funktionalität des Steuerungssystems und enthält z.B. Technologieobjekte, wie Positionierachsen, Gleichlaufachsen, die miteinander gemäß ihrer Funktionalität verschaltbar sind. Zusätzlich weist die Vorrichtung ein Engineeringsystem auf, mit dem die Inbetriebnahme, Projektierung, Parametrierung von Steuerungen und Antrieben möglich ist und/oder mit dem das Steuerungsprogramms auf der Basis der über ein Objektmodell dargestellten Funktionalität des Steuerungssystems erstellt wird.

Der Erfindung liegt die Aufgabe zugrunde, das Testen eines Softwaresystems schnell und kostengünstig durchführbar zu machen.

Diese Aufgabe wird erfindungsgemäß gelöst durch ein Verfahren zum Testen eines Softwaresystems zum Betreiben einer technische Anlagen unter Einbezug einer technischen Anlage, die bei einem Kunden in Betrieb ist, wobei ein Betriebsmodell erstellt wird, das auf einem reproduzierbaren Betriebsablauf unter für den Kunden relevanten Bedingungen basiert und das das Betreiben der technischen Anlage kontrolliert, wobei das zu testende Softwaresystem auf der technischen Anlage des Kunden eingespielt wird und wobei diese technischen Anlage mit dem Betriebsmodell betrieben und kontrolliert wird und wobei abschließend der Betrieb der technischen Anlage des Kunden mit dem Betriebsmodell hinsichtlich möglicher aufgetretener fehlerhafter Abläufe ausgewertet wird.

Unter Betriebsmodell versteht man im weitesten Sinne die Möglichkeit den Ablauf des Betriebs der technischen Anlage zu kontrollieren. Dies umfasst einerseits das Definieren des Betreibens der technischen Anlage, beispielsweise das Festhalten oder Kopieren eines typischen Betriebsablaufs beim Kunden oder das Wiederholen dieses Betriebsablaufs zu einem späteren Zeitpunkt. Andererseits kann das Kontrollieren des Betriebsablaufs auch eine Überprüfung umfassen, beispielsweise durch Protokollieren oder Bewerten des Erfolgs des Betriebsablaufs.

Das Verfahren zum Testen eines Softwaresystems hat mehrere Vorteile. Zum einen vereinfacht das Verwenden eines Betriebsmodells den Vergleich des Betriebs einer einzelnen technischen Anlage mit verschiedenen Softwaresystemen unter standardisierten Bedingungen. Zum anderen können die standardisierten Bedingungen an grundlegende und wichtige Betriebsformen der technischen Anlage dem Kunden entsprechend angepasst werden. Dies hat den weiteren Vorteil, dass mittels eines Betriebsmodells verschiedene Tests durchgeführt werden, die zusammen die kundenspezifischen Bedürfnisse überprüfen. Dadurch, dass kostspielige technischen Anlagen des Kunden im sogenannten Schattenbetrieb, d.h. außerhalb der betrieblich genutzten Zeiten, eingesetzt werden, kann das Testen erheblich kostengünstiger durchgeführt werden, da die teuren technischen Anlagen nicht mehr vom Hersteller zu Software-Entwicklungszwecken zur Verfügung gestellt werden müssen.

Dabei zeichnen sich besonders vorteilhafte Ausgestaltungen dadurch aus, dass das Betriebsmodell in Form eines Protokolls Eingangsparameter, Eingangsdaten und/oder Randbedingungen der technischen Anlage beschreibt. Dies hat den Vorteil, dass das Testen unter reproduzierbaren Bedingungen durchgeführt werden kann, da diese im Betriebsmodell festgehalten werden.

In einer vorteilhaften Ausführungsform werden im Betriebsmodell Grenzwerte festgelegt. Dies hat den Vorteil, dass zwischen einem ordnungsgemäßen und einem fehlerbehafteten Ablauf differenziert werden kann.

In einer vorteilhaften Ausführungsform basiert das Betriebsmodell auf einem reproduzierbaren Messvorgang. Beispielsweise kann ein solcher Messvorgang an einem Phantom durchgeführt werden, das die Rahmenbedingungen des Messvorgangs festlegt. Dies verbessert die Vergleichbarkeit der Betriebsabläufe mit verschiedenen Softwaresystemen.

In einer besonders vorteilhaften Ausführungsform des Verfahrens wird nach dem Testen auf die ursprünglich installierte Software zurückgewechselt. Dies hat den Vorteil, dass sich für den Kunden an der Funktionsfähigkeit der technischen Anlage beim Betrieb mit der ursprünglich installierten Software nichts geändert hat. Ein Einspielen des Softwaresystems erfolgt nach einer generellen Freigabe durch den Hersteller.

In einer weiteren Ausführungsform des Verfahrens wird nach dem Testen des Softwaresystems eine Rückmeldung an einen Software-Entwickler erfolgen. Dies hat den Vorteil, dass der Software-Entwickler alle Informationen bezüglich neu aufgetretener Fehler oder anderer die Leistung der technischen Anlage kennzeichnender Parameter, wie z.B. Antwortzeiten oder Benutzerangaben, übermittelt bekommt und dass er nach einer Analyse der Rückmeldung das Softwaresystem verbessern kann.

Weitere vorteilhafte Ausführungsformen der Erfindung sind durch die Merkmale der Unteransprüche gekennzeichnet.

Es folgt die Erläuterung eines Ausführungsbeispiels der Erfindung anhand eines Ablaufdiagramms.

An einer Kundenanlage 1 wird für einen typischen Betriebsabschnitt eines Magnetresonnztomographiegeräts, also z.B. für einen ganzen Tag oder für einen einzelnen Patienten ein Betriebsmodell 3 erstellt. Dieses ist dadurch gekennzeichnet, dass sowohl Eingangsparameter, wie z.B. Eingaben eines, das MR-Gerät bedienenden medizinisch technischen Assistenten, als auch andere Vorgaben, wie z.B. Patientendaten unter Berücksichtigung des Datenschutzes, protokolliert werden. Des Weiteren werden Ausgabedaten, beispielsweise Fehler-, Verlaufsoder Statusprotokolle sowie zusätzliche Daten, wie z.B. die Anzahl der Aufnahmen, vom Betriebsmodell 3 festgehalten.

Optional werden im Betriebsmodell 3 Grenzwerte festgelegt, welche eine Unterscheidung zwischen einem ordnungsgemäßen Ablaufen und einem fehlerbehafteten Ablauf ermöglichen. Solch ein Grenzwert kann durch z.B. einen Fehlerzähler überprüft werden, der den Schweregrad auftretende Fehler oder bestimmte Zeitkonstanten, wie z.B. die Antwortzeiten auf Benutzereingaben, oder die Abarbeitungszeiten bestimmter Routinen protokolliert. Das Betriebsmodell 3 ist in allen seinen Kriterien durch die speziellen Randbedingungen der Kundenanlage 1 gekennzeichnet.

Das Betriebsmodell 3 kann auch in engem Bezug zur Entwicklung eines neuen Softwaresystems 5 erstellt werden.

Das Betriebsmodell 3 soll eine hervorragende Reproduzierbarkeit eines Messvorgangs oder eines Betriebsabschnitts gewährleisten. Dies legt den Einsatz von standardisierten Betriebsoder Messabläufen nahe, beispielsweise bei MR-Geräten die Benutzung von Phantomen.

Das Testen des Softwaresystems 5 verläuft beispielsweise wie folgt. Die Kundenanlage 1 ist mit einer Ursprungssoftware konfiguriert, mit der Untersuchungen 7 am Patienten durchgeführt werden. Im nächsten Schritt findet ein Betreiben 8 der Kundenanlage 1, auf der eine Ursprungssoftware installiert ist, nach dem Betriebsmodell 3 an einem Phantom oder Probanden statt. Ein erstes Ergebnis des Betreibens 8 wird an einen Software-Entwickler des neuen Softwaresystems 5 per Email übermittelt.
Das rückgemeldete Ergebnis kann beispielsweise Informationen bezüglich aufgetretener Fehler oder anderer die Leistungsfähigkeit der Software kennzeichnender Parameter, z.B. Antwortzeiten auf Benutzerangaben, enthalten.

Im nächsten Schritt findet ein Einspielen 9 des neuen Softwaresystems 5 über Internet vom Software-Entwickler auf der Kundenanlage 1 statt. Dies erfolgt in kurzfristig reversibler Weise, so dass es jederzeit vom Kunden oder vom Software-Entwickler rückgängig gemacht werden kann, z.B. durch Booten der Kundenanlage 1 von zwei verschiedenen Festplatten.

Im nächsten Schritt findet ein Testen 11 der Kundenanlage 1 unter Verwendung desselben Betriebsmodells 3 und desselben Phantoms oder Probanden statt. Ein zweites Ergebnis wird wieder per Email übermittelt und mit dem ersten Ergebnis verglichen. Dabei wird beispielsweise überprüft, ob Grenzwerte eingehalten wurden. Stellt sich eine wesentliche Verschlechterung im Betrieb der Kundenanlage 1 mit dem Softwaresystem 5 ein, z.B. eine Verlängerung von Zeitkonstanten, zusätzliche Fehlermeldungen oder besonders schwere Fehler, so findet ein Reboot 13 der Kundenanlage 1 kurzfristig mit der alten Software statt und Untersuchungen 15 werden wieder durchgeführt.

Mit Hilfe der Ergebnisse wird ein verbessertes Softwaresystem 17 erstellt, das in einer weiteren Installation 19 über Internet auf der Kundenanlage 1 eingerichtet wird.

Erneut wird mittels des Betriebsmodells 3 ein Testen 21 dieser verbesserten Version durchgeführt. Falls alle Mängel in ausreichender Weise behoben sind, kann die Kundenanlage nun mit dem verbesserten Softwaresystem 17 Untersuchungen 23 an Patienten durchführen. Falls noch immer Mängel auftreten, wird mindestens ein weiterer Test- und Verbesserungszyklus durchlaufen.

Das Einspielen und Testen des neuen Softwaresystems 5 kann außerhalb der Behandlungszeiten von Patienten, wie z.B. nachts, durchgeführt werden. Es kann z.B. von sich in Ausbildung befindenden Klinikpersonal oder mittels einer in das Softwaresystem integrierten Testsoftware durchgeführt werden, wobei die Testsoftware beispielsweise die Eingaben eines Bedieners zuerst aufzeichnet und anschließend identisch reproduziert.

An modernen MR-Systemen stehen Mittel zur Verfügung, welche eine Einblendung von computergestützten Paradigmen für die sogenannte funktionelle MR erlauben. Solche Mittel können z.B. MR-Gerät verträgliche Displays für den zu untersuchenden Probanden oder Eingabegeräte, wie z.B. MR-Gerät verträgliche Mäuse, sein. Diese Mittel können eingesetzt werden um ein Betriebsmodell zu erstellen, in dem der Bediener der Kundenanlage 1 zugleich auch Proband ist. In diesem Betriebsmodell führt der im MR-Gerät liegende Bediener alle im Betriebsmodell festgelegten Schritte selbst durch, wobei etwaige Magnetresonanzmessungen an ihm durchgeführt werden. Dies ermöglicht eine kostengünstige von weiterem Personal unabhängige Durchführung des Verfahrens.

Die vorgeschlagene Erfindung ermöglicht auch einen kontinuierlichen Entwicklungsprozess, durch den Neuerungen schneller an die Kunden übergeben werden können. Einen Beitrag dazu liefert der Aspekt, dass auch Kundenanlagen dazu benutzt werden, neue Software-Versionen zu testen. Das Testen von Software kann so gut wie jederzeit beim Kunden stattfinden, wobei es im speziellen die Anforderungen des Kunden an seine Anlage berücksichtigt. Entsprechend kann das Verfahren an mehreren ausgesuchten technischen Anlagen, die beim Kunden stehen, mit verschiedenen, an den jeweiligen Kunden angepassten Betriebsmodellen zum Testen von Software durchgeführt werden. Dies beschleunigt die Entwicklung erheblich, da sie kontinuierlich stattfinden kann.

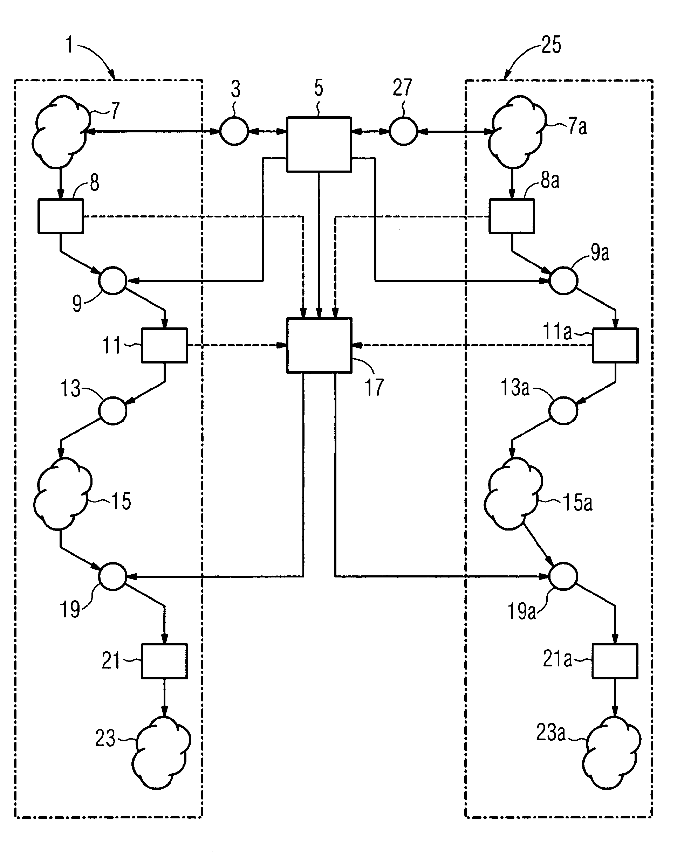

In der Figur ist zur Verdeutlichung des Einsatzes von mehreren Kundenanlagen eine weitere Kundenanlage 25 angedeutet, für die ebenfalls ein Betriebsmodell 27 entworfen wird. In die Entwicklung des Softwaresystem 5 können also auch Ergebnisse aus dem Einbezug weiterer Kundenanlagen eingehen, beispielsweise durch ein Betreiben 8a der Kundenanlage 25 mit dem Betriebsmodell 27 auf Grundlage einer Ursprungssoftware oder durch ein Testen 11a des neuen Softwaresystems 5 mit dem Betriebsmodell 27. Untersuchungen 7a, 15a an Patienten können solange mittels der dazugehörigen Ursprungssoftware durchgeführt werden, bis das verbesserte Softwaresystem 17 einen fehlerfreien Ablauf der Untersuchungen 23a ermöglicht. Das Wechseln 9a, 13a, 19a zwischen der Ursprungssoftware und dem Softwaresystem 5, 17 kann ebenfalls vom Software-Entwickler per Internet eingeleitet werden.

## Patentansprüche

1. Verfahren zum Testen eines Softwaresystems (5) zum Betreiben einer technische Anlagen unter Einbezug einer solchen technischen Anlage (1), die bei einem Kunden in Betrieb ist, mit folgenden Verfahrensmerkmalen:
- Erstellen eines Betriebsmodells (3, 27), das auf einem reproduzierbaren Betriebsablauf unter für den Kunden relevanten Bedingungen basiert und das das Betreiben der technischen Anlage (1, 25) kontrolliert,
- Einspielen des zu testenden Softwaresystems (5) auf der technischen Anlage (1, 25) des Kunden,
- Betreiben und Kontrollieren der technischen Anlage (1, 25) des Kunden mit dem Betriebsmodell (3, 27),
- Auswerten des Betriebs der technischen Anlage (1, 25) des Kunden mit dem Betriebsmodell (3, 27) hinsichtlich möglicher aufgetretener fehlerhafter Abläufe.

2. Verfahren nach Anspruch 1,
**dadurch gekennzeichnet, dass** die technische Anlage (1, 25) des Kunden mit einer ursprünglich auf der technischen Anlage installierten Software mit dem Betriebsmodell (3, 27) betrieben wird.

3. Verfahren nach Anspruch 1 oder 2,
**dadurch gekennzeichnet, dass** das Betriebsmodell (3, 27) in Form eines Protokolls Eingangsparameter, Eingangsdaten und/oder Randbedingungen der technischen Anlage (7, 25) des Kunden dokumentiert.

4. Verfahren nach einem der Ansprüche 1 bis 3,
**dadurch gekennzeichnet, dass** das Betriebsmodell (3, 27) Grenzwerte zur Differenzierung zwischen einem ordnungsgemäßen und einem fehlerbehafteten Ablauf festlegt.

5. Verfahren nach einem der Ansprüche 1 bis 4,
**dadurch gekennzeichnet, dass** das Betriebsmodell (3, 27) den Bedienungsablauf sowie die Dokumentation automatisiert durchführt.

6. Verfahren nach einem der Ansprüche 1 bis 5,
**dadurch gekennzeichnet, dass** nach dem Testen (11) auf die ursprünglich installierte Software zurückgewechselt wird.

7. Verfahren nach einem der Ansprüche 1 bis 6,
**dadurch gekennzeichnet, dass** eine Rückmeldung über das Testen (11) des Softwaresystems an einen Software-Entwickler erfolgt.

8. Verfahren nach Anspruch 7,
**dadurch gekennzeichnet, dass** mittels einer Analyse der Rückmeldung eine Verbesserung des Softwaresystems (5) erfolgt.
